# EUROPEAN PATENT SPECIFICATION

(11) **EP 3 131 964 B1**
(45) Date of publication and mention of the grant of the patent: **26.05.2021**
(21) Application number: 15780033.5
(22) Date of filing: 08.04.2015
(51) Int. Cl.: C08L 27/06

(54) **THERMOPLASTIC COMPOSITIONS COMPRISING HIGH RUBBER IMPACT MODIFIERS**
THERMOPLASTISCHE ZUSAMMENSETZUNGEN, DIE SCHLAGZÄHIGKEITSMODIFIKATOREN MIT HOHEM KAUTSCHUKSCHLAGZÄHIGKEITSGEHALT ENTHALTEN
COMPOSITIONS THERMOPLASTIQUES COMPRENANT DES MODIFICATEURS DE LA RESISTANCE AU CHOC A FORTE TENEUR EN CAOUTCHOUC

(30) Priority: 16.04.2014 US 201461980073 P
(43) Date of publication of application: 22.02.2017
(73) Proprietor: Arkema, Inc., King of Prussia, PA 19406 (US)
(72) Inventor: LYONS, Jason M., King of Prussia Pennsylvania 19406 (US); LAVACH, Mark L., Allentown Pennsylvania 18103 (US)
(74) Representative: Arkema Patent
(86) International application number: PCT/US2015/024819
(87) International publication number: WO 2015/160579

(56) References cited:
- EP-A1- 0 527 605
- WO-A1-2005/012392
- WO-A1-2005/063826
- US-A1- 2011 160 338
- US-A1- 2011 305 862
- US-B2- 6 900 254

## Description

### FIELD OF THE INVENTION

The present invention relates to thermoplastic compositions comprising core-shell impact modifiers with high rubber content; methods for making such thermoplastic compositions, particularly polyvinyl chloride (PVC) formulations; and products made by those methods.

### BACKGROUND OF THE INVENTION

Polyvinyl chloride (PVC) is widely used in such applications as films, siding, sheets, pipe, window profiles, fencing, decking and tubing. It is often the case that PVC by itself is brittle and does not possess suitable impact strength for various end uses. To overcome this shortcoming, PVC is often blended with impact modifiers so that it is less prone to failure on impact.

Known impact modifiers include core-shell impact modifiers and chlorinated polyethylene (CPE). Core-shell impact modifiers contain a relatively soft rubbery "core" (for example, polybutadiene) surrounded by a relatively hard "shell" (for example, poly(methyl methacrylate)). The weight percentage of the rubbery phase based on the total core-shell polymer particle has typically not exceeded 90 weight percent to avoid compromising the strength of the shell coverage. A common low-cost alternative to core-shell impact modifiers is chlorinated polyethylene (CPE). For example, in U.S. Patent No. 3,006,889, chlorinated polyethylenes blended with PVC are disclosed. Historically, CPE was used at increased loading levels to attain equivalent performance to core-shell impact modifiers. However, recent advances in CPE technology made it possible to use CPE at loading levels equivalent to those of core-shell impact modifiers at lower cost.

In many cases, manufacturers would like to switch from CPE to core-shell impact modifiers for use with their PVC resins because core-shell impact modifiers offer many advantages; for example, core-shell impact modifiers can act as lubricants, and they have excellent impact efficiency, weatherability, and processibility over a broad range of blending and extrusion conditions (e.g., they provide manufacturers with more flexibility to adjust various parameters during the compounding or blending process, such as fusion times). Despite the advantages of core-shell impact modifiers, CPE has been more commonly used due to its lower cost. Various methods have been suggested for improving the impact strength of CPE in PVC resins; for example, in U.S. Patent No. 5,338,803 and European Patent Application No. 0,343,657. However, there remains a need for cost-effective compositions and methods that enable manufacturers to replace CPE with core-shell impact modifiers in thermoplastic formulations, particularly PVC formulations. WO-A-2005/012392, WO-A-2005/063826 and EP-A-527605 disclose PVC compositions comprising core/shell impact modifiers with high rubber content. Nevertheless, none of these documents discloses a composition according to present claims: in particular, higher amount of impact modifier are used in all the examples of these documents.

### SUMMARY OF THE INVENTION

Embodiments of the present invention relate to compositions and methods that enable manufacturers to cost-effectively replace CPE with core-shell impact modifiers in thermoplastic formulations, particularly PVC formulations. Embodiments of the invention also relate to products made by such methods.

Embodiments of the present invention relate to a thermoplastic composition comprising, consisting essentially of, or consisting of a thermoplastic resin (PVC resin) and between 1.5 parts and 2.5 parts of a core-shell impact modifier per 100 parts by weight of the thermoplastic resin, wherein the core-shell impact modifier has a rubber content of at least 90 wt% (e.g., between 92 wt% and 95 wt%). According to preferred embodiments, a product formed from the composition has a normalized mean impact resistance that is equivalent to, or greater than, the normalized mean impact resistance of a product formed from a composition that is identical except that it includes at least 3.5 parts of CPE per 100 parts of the thermoplastic resin instead of the core-shell impact modifier. According to particular embodiments, the composition further includes at least one additional ingredient selected from the group consisting of (i) at least one stabilizer, (ii) at least one lubricant, (iii) at least one process aid, (iv) at least one mineral filler, and (v) a combination thereof.

Embodiments of the present invention also relate to a method for making a thermoplastic composition comprising, consisting essentially of, or consisting of blending a thermoplastic resin (e.g., a PVC resin) with between 1.5 parts and 2.5 parts of a core-shell impact modifier per 100 parts of the thermoplastic resin, wherein the core-shell impact modifier has a rubber content of at least 90 wt% (e.g., between 92 wt% and 95 wt%). According to particular embodiments, the method further includes the step(s) of blending at least one additional ingredient with the thermoplastic resin and the core-shell impact modifier, wherein the at least one ingredient is selected from the group consisting of (i) at least one stabilizer, (ii) at least one lubricant, (iii) at least one process aid, (iv) at least one mineral filler, and (v) a combination thereof.

Embodiments of the present invention also relate to articles of manufacture comprising the above-described thermoplastic compositions, for example, in the form of a pipe, flooring, foam, siding, fencing, paneling, decking, capstock, a window frame, or a door frame.

The present invention provides compositions and methods that enable manufacturers to cost-effectively replace CPE with core-shell impact modifiers in thermoplastic formulations. The applicants have discovered that core-shell impact modifiers can be included in thermoplastic formulations, particularly PVC formulations, at lower loading levels than previously considered possible, particularly when the rubber content is at least 90 wt%. The applicants' thermoplastic formulations with reduced loading levels of core-shell impact modifiers (e.g., between 1.5 parts and 2.5 parts of core-shell impact modifier per 100 parts of a PVC resin) have been found to demonstrate equivalent or improved impact performance compared to formulations with conventional loading levels.

### DETAILED DESCRIPTION

One aspect of the present invention relates to a thermoplastic composition comprising, consisting essentially of, or consisting of a thermoplastic resin (preferably a PVC resin) and between 1.5 parts and 2.5 parts of a core-shell impact modifier per 100 parts by weight of the thermoplastic resin, wherein the core-shell impact modifier has a rubber content of at least 90 wt%. According to preferred embodiments, a product formed by the composition has a normalized mean impact resistance (mean failure energy per mil) that is equivalent to, or greater than, the normalized mean impact resistance of a product formed by a composition that is identical except that it includes at least 3.5 parts of CPE per 100 parts of the thermoplastic resin instead of the core-shell impact modifier. The normalized mean impact resistance (mean failure energy per mil) may be measured, for example, by forming the thermoplastic composition into a sheet and performing a dart drop impact test using ASTM D 4226, procedure A to calculate the normalized mean failure energy (normalized mean impact resistance) of each extruded composition. Other suitable methods may alternatively be used (e.g., ASTM D 256). The composition may be formed into a sheet by extruding the composition into a sheet to a thickness of about 40 mils (e.g., by adding the composition to a Brabender conical twin screw extruder with a 6 inch flex-lip sheet die and extruding the composition with extruder settings of Zone 1, 172 °C; Zone 2, 176 °C; Zone 3, 183 °C; die 182 °C; screw speed, 35 rpm; and feeder setting of 55). Alternatively, the composition may be formed into a sheet by (1) milling at 190°C, wherein speed = 25rpm, friction (speed ratio between first and second roll) = 1.20, gap = 0.36 inches, for a mill time of 3 minutes; and cutting and folding the material on the mill every 30 seconds post banding to mix; (2) removing the sheet from the mill, folding the sheet into a 6x6 square and setting it into a 7x7x0.125 inch frame with aluminum sheets; (3) pressing at 195°C, 2 minutes on low pressure at 5 tons, 3 minutes on high pressure at 25 tons; (4) transferring to a cooling press; (5) cooling for 3.5 minutes on low pressure.

Core-shell impact modifiers are in the form of particles having an inner elastomer core (also referred to herein as a rubber core) and at least one outer thermoplastic shell situated on the inner elastomer core. As used herein, the "rubber content" of core-shell impact modifier particles refers to the weight percent of the rubber core in the particles based on the total weight of the particles. According to particular embodiments, the particle size of a core-shell impact modifier is generally less than 1 µm; for example, between about 50 nm and about 1,000 nm, or between about 50 nm and about 500 nm, or between about 80 nm and about 700 nm, most preferably between about 90 nm and about 350 nm. Particle size may be measured, for example, with a NiComp® Model 380 ZLS. The core-shell polymer particles are typically spherically-shaped; however, they can have any suitable shape. In preferred embodiments, the core-shell modifier particles included in the thermoplastic composition have equivalent or substantially equivalent mean particle diameters (i.e., the composition does not include more than one population of core-shell modifier particles having different mean particle diameters).

According to particular embodiments, the core-shell impact modifier has a rubber content of at least 90 wt%, or at least 92 wt%, or at least 92.5 wt%, or at least 93 wt%, or at least 93.5 wt%, or at least 94 wt%, or at least 94.5 wt%, or at least 95 wt%. According to alternative embodiments, the core-shell impact modifier has a rubber content between 90 wt% and 97 wt%, or between 90 wt% and 96.5 wt%, or between wt% and 96 wt%, or between 90 wt% and 95.5 wt%, or between 90 wt% and 95 wt%. According to preferred embodiments, the core-shell impact modifier has a rubber content between 90 wt% and 96 wt%, or between 92 wt% and 95 wt%. It should be understood that the core-shell impact modifiers of the present invention include a rubber core and at least one outer thermoplastic shell (as described herein); therefore, they have a "rubber content" of less than 100 wt% (e.g., less than 99 wt%, or less than 98 wt%, or less than 97 wt%, or less than 96 wt%).

The thermoplastic composition includes between between 1.5 parts to 2.5 parts of the core-shell impact modifier per 100 parts of the thermoplastic resin.

In a preferred embodiment, the thermoplastic resin is PVC used in rigid PVC applications. The PVC resin preferably has a K value ranging from 40K to 100K, or a weight average molecular weight ranging from 25,000 Da to 200000 Da. Sample molecular weight equivalencies for K value, Mn and Mw of PVC are provided in the following table.

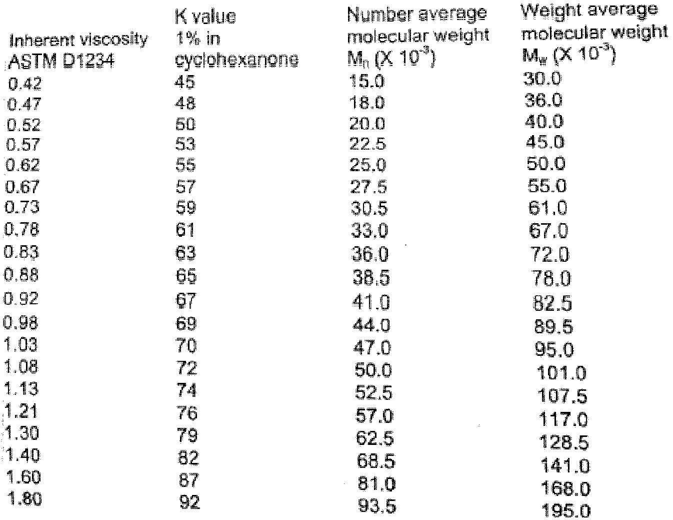

The types of core-shell impact modifiers that are used in accordance with the present invention include methacrylate-butadiene-styrene copolymers (MBS), which typically have a core comprising a copolymer of butadiene and styrene and a shell comprising poly(methyl methacrylate) (PMMA); acrylonitrile-butadiene-styrene copolymers (ABS); or acrylic impact modifiers (AIM), which typically have an acrylic core (e.g., butyl acrylate or 2-thylhexyl acrylate) and a PMMA shell.

According to another embodiment, the thermoplastic composition further comprises at least one stabilizer. Any stabilizer(s) suitable for use in thermoplastic formulations comprising core-shell impact modifiers may be included in compositions of the present invention. Exemplary stabilizers are known in the art. Non-limiting examples include mono-, di-, tri- alkyltins/organotins, calcium/zinc stabilizers, lead stabilizers, barium/cadmium with or without sulfates, carbonates, phenates, carboxylates, mercaptides. The amount of stabilizer(s) included in the composition is not particularly limited. According to particular embodiments, the composition includes between 0.1 and 10.0 parts stabilizer(s), or between 0.2 and 7.5 parts stabilizer(s), or between 0.25 and 5.0 parts stabilizer(s) per 100 parts by weight of the thermoplastic resin.

According to another embodiment, the thermoplastic composition further comprises at least one lubricant. Any lubricant(s) suitable for use in thermoplastic formulations comprising core-shell impact modifiers may be included in compositions of the present invention. Exemplary lubricants are known in the art. Non-limiting examples include calcium stearate, fatty acids, fatty acid salts, esters (e.g., of polyols, fatty alcohols), ethylene bisstearamide (EBS), paraffin waxes, polyethylene waxes (e.g., polyethylene wax oxides), OPE waxes, Fisher-Tropsch waxes. The amount of lubricant(s) included in the composition is not particularly limited. According to particular embodiments, the composition includes between 0.1 and 5.0 parts lubricant(s), or between 0.1 and 4.0 parts lubricant(s), or between 0.1 and 3.0 parts lubricant(s) per 100 parts by weight of the thermoplastic resin.

According to another embodiment of the present invention, the thermoplastic composition further comprises at least one process aid (i.e., at least one linear, non-core/shell process aid). It is known in the art that different types of process aids affect thermoplastic compositions, particularly PVC compositions, in different ways. For example, some process aids assist in the fusion of a thermoplastic composition (e.g., a PVC composition), while others add melt strength or provide lubrication. Process aids alone do not typically change the mechanical properties of a PVC composition, but they may increase the shear heating efficiency and thereby allow the fusion of the PVC to improve. The inclusion of a process aid often improves the impact performance of a thermoplastic composition, but the process aid is separate from the impact modifier(s) included in the composition (i.e., the process aid itself is not an impact modifier *per se).* Any process aid(s) suitable for use in thermoplastic formulations, particularly PVC formulations comprising core-shell impact modifiers, may be included in compositions of the present invention. Exemplary process aids are known in the art. Non-limiting examples include acrylic process aids, such as Plastistrength® 530, 550, 551, 552, 557, 559, 576, 770 and L1000 (available from Arkema, Inc.).

According to particular embodiments, the impact modifiers and process aid(s) are added to the thermoplastic composition as an intimate blend formed by the co-powderization of aqueous emulsions, suspensions or slurries of the impact modifier and process aid(s). They may be blended together, for example, by spray drying, coagulation, freeze coagulation or other known methods. Non-limiting examples of such methods are described in U.S. Patent No. 8,378,013 and U.S. Publication No. 2011/0305862, which are incorporated by reference herein. According to one embodiment, a PVC composition of the present invention includes an impact modifier and at least one process aid co-spray dried together.

The amount of process aid(s) included in the composition is not particularly limited. According to particular embodiments, the composition includes between 0.1 and 10.0 parts process aid(s), or between 0.1 and 7.5 parts process aid(s), or between 0.1 and 5.0 parts process aid(s), or between 0.1 and 2.5 parts process aid(s) per 100 parts by weight of the thermoplastic resin.

According to another embodiment of the present invention, the thermoplastic composition further comprises at least one mineral filler, such as calcium carbonate (CaCO₃). Any mineral filler(s) suitable for use in thermoplastic (e.g., PVC) formulations comprising core-shell impact modifiers may be included in compositions of the present invention. Exemplary mineral fillers are known in the art. Non-limiting examples include ground natural calcium carbonate (GCC), precipitated calcium carbonate (PCC), nanosized PCC (NPCC), silica (fumed or precipitated), clay, Montmorillonite (nano-clay), zeolite, perlite. The amount of mineral filler(s) included in the composition is not particularly limited. According to particular embodiments, the composition includes between 0.1 and 40.0 parts mineral filler(s), or between 0.1 and 35.0 parts mineral filler(s), or between 0.1 and 30.0 parts mineral filler(s), or between 0.1 and 25.0 parts mineral filler(s), or between 0.1 and 20.0 parts mineral filler(s), or between 0.1 and 15.0 parts mineral filler(s), or between 0.1 and 10.0 parts mineral filler(s), or between 0.1 and 5.0 parts mineral filler(s), or between 0.1 and 2.5 parts mineral filler(s) per 100 parts of the thermoplastic resin.

According to particular embodiments, the impact modifiers and mineral filler(s) are added to the thermoplastic composition as an intimate blend formed by the co-powderization of aqueous emulsions, suspensions or slurries of the impact modifier and mineral filler(s). The intimate blend may further include process aid(s) (i.e., the intimate blend may include impact modifier, mineral filler(s) and process aid(s)). The components may be blended together, for example, by spray drying, coagulation, freeze coagulation or other known methods. As noted above, non-limiting examples of such methods are described in U.S. Patent No. 8,378,013 and U.S. Publication No. 2011/0305862. According to one embodiment, a PVC composition of the present invention includes an impact modifier and at least one mineral filler co-spray dried together. According to another embodiment, a PVC composition of the present invention includes an impact modifier, at least one process aid, and at least one mineral filler co-spray dried together.

According to additional embodiments, a thermoplastic composition comprises, consists essentially of, or consists of a thermoplastic (e.g., PVC) resin, between 1.5 and 2.5 parts of a core-shell impact modifier per 100 parts by weight of the thermoplastic resin (wherein the core-shell impact modifier has a rubber content of at least 90 wt%), at least one low Tg process aid (e.g., Plastistrength® 576), and at least one mineral filler. A low Tg process aid may promote faster fusion, which enables the content of the mineral filler (e.g., calcium carbonate) in the PVC composition to be increased. As used herein, a low Tg process aid is a process aid that has a Tg less than 90°C as measured by DSC through ASTM D3418 (Transition Temperatures of Polymer by Differential Scanning Calorimetry).

Other optional additives, such as heat stabilizers, internal and external lubricants, melt strength additives, other fillers, plasticizers, flow aids, blowing agents, and/or pigments (e.g., titanium dioxide) may also be included in thermoplastic compositions of the present invention. The amount of additive(s) included in the composition is not particularly limited. According to particular embodiments, the composition includes between 0.1 and 40.0 parts additive(s), or between 0.1 and 30.0 parts additive(s), or between 0.1 and 20.0 parts additive(s), or between 0.1 and 15.0 parts additive(s), or between 0.1 and 10.0 parts additive(s), or between 0.1 and 5.0 parts additive(s), or between 0.1 and 2.5 parts additive(s), or between 0.1 and 1.0 parts additive(s) per 100 parts of the thermoplastic resin.

According to particular embodiments, the thermoplastic composition comprises, consists essentially of, or consists of a thermoplastic resin (PVC), between 1.5 and 2.5 parts of a core-shell impact modifier per 100 parts of the thermoplastic resin, optionally at least one stabilizer, optionally at least one lubricant, optionally at least one process aid, optionally at least one mineral filler, and optionally at least one additional type of additive, wherein the core-shell impact modifier has a rubber content of at least 90 wt%

According to a preferred embodiment, the thermoplastic composition comprises, consists essentially of, or consists of a thermoplastic resin ( PVC), between 1.5 and 2.5 parts of a core-shell impact modifier per 100 parts of the PVC resin (with a rubber content of at least 90 wt%), at least one process aid, and at least one mineral filler (e.g., calcium carbonate). According to an alternative embodiment, the thermoplastic composition comprises, consists essentially of, or consists of a thermoplastic resin (PVC), between 1.5 and 2.5 parts of a core-shell impact modifier per 100 parts of the PVC resin (with a rubber content of at least 90 wt%), and at least one additional ingredient selected from the group consisting of (i) at least one stabilizer, (ii) at least one lubricant, (iii) at least one process aid, (iv) at least one mineral filler, and (v) a combination thereof,

Additional embodiments of the present invention provide articles of manufacture formed from a thermoplastic composition of the present invention (e.g., by injection molding, extrusion, calendaring, blow molding, foaming and thermoforming). Non-limiting examples of articles of manufacture include pipe, foam, siding, fencing, paneling, decking, capstock, window profiles, door profiles.

Additional aspects of the present invention relate to methods for making the thermoplastic compositions and articles of manufacture described herein. The thermoplastic composition may be formulated by any means known in the art, generally as a dry blend of components that are blended until a homogeneous compound is obtained; and formed into articles of manufacture by conventional melt processing techniques (e.g., injection molding, extrusion, calendaring, blow molding, foaming and thermoforming). According to one embodiment, a method for making a thermoplastic composition comprises, consists essentially of, or consists of blending a thermoplastic resin (a PVC resin) with between 1.5 and 2.5 parts of a core-shell impact modifier per 100 parts of the PVC resin, wherein the core-shell impact modifier has a rubber content of at least 90 wt% (e.g., between 92 wt% and 95 wt%) The method may further include the step(s) of blending at least one additional ingredient with the thermoplastic resin and the core-shell impact modifier, wherein the at least one ingredient is selected from the group consisting of (i) at least one stabilizer, (ii) at least one lubricant, (iii) at least one process aid, (iv) at least one mineral filler, and (v) a combination thereof. The method may further include the step of extruding the thermoplastic composition to form an article (e.g., a pipe, flooring, foam, siding, fencing, paneling, decking, capstock, a window frame, a door frame).

As the rubber core weight fraction of a core-shell impact modifier increases, there tends to be a corresponding decrease in the weight fraction, thickness, and hardness of the outer polymer shell. If the shell becomes too thin, it will not sufficiently cover the rubber core. Improper shell coverage can lead to problems, including reduced impact strength in polymer blends.

The embodiments described herein are intended to be exemplary of the invention and not limitations thereof.

The following examples further illustrate embodiments of the invention and are to be construed as illustrative and not in limitation thereof.

### EXAMPLES

As used herein, a high molecular weight process aid has a weight average molecular weight of over 5,000,000 Da; a medium molecular weight process aid has a molecular weight between about 1,000,000 Da and about 5,000,000 Da; and a low molecular weight process aid has a molecular weight of less than 1,000,000 Da.

An embodiment of a PVC formulation of the present invention comprises, consists essentially of, or consists of the following components:
PVC Resins (100 parts)
Stabilizer(s) (0.25-5.0 parts)
Lubricant Package of
   1. Calcium Stearate (0.0-3.0 parts)
   2. Parrafin wax (0.0-3.0 parts)
   3. Oxidized polyethylene wax (0.0-3.0 parts)
Core-shell impact modifier(s) (0.25-3.5 parts)
Process aid(s) (0.0-5.0 parts)
Lubricating process aid(s) (0.0-5.0 parts)
Calcium Carbonate (0.0-35.0 parts)
Titanium Dioxide (0.0-15 parts)

References and an embodiment of a composition of the present invention that may be used in the manufacture of siding substrate or fencing substrate comprises, consists essentially of, or consists of the following components (the core-shell impact modifier, process aid(s), and calcium carbonate may optionally be included as an intimate blend that has been co-spray dried together):

| Components | phr | Range |
|---|---|---|
| PVC-5385, K65 (available from Axiall/Georgia Gulf) | 100.0 | |
| Thermolite® 140 (stabilizer, available from PMC) | 1.0 | 0.5-1.5 |
| Calcium stearate | 1.2 | 0.5-1.5 |
| Rheolub® 165 (lubricant, available from Honeywell) | 1.1 | 0.5-1.5 |
| AC® 629A (lubricant, available from Honeywell) | 0.1 | 0.0-0.5 |
| Durastrength® 350 (acrylic core-shell impact modifier with 90 wt% rubber content, available from Arkema, Inc.) | 3.0 | 1.5-3.5 |
| Plastistrength® 530 (high molecular weight process aid, available from Arkema, Inc.) | 0.5 | 0.1-1.5 |
| P770 (low molecular weight process aid, available from Arkema, Inc.) | 0.4 | 0.0-1.5 |
| CaCO₃ (UFT, available from Omya) | 15.0 | 10-25 |
| TiO₂ (TiONA® RCL-4) | 3.0 | 1-5 |
| Total | 125.3 | |

References and an embodiment of a composition of the present invention that may be used in the manufacture of a window profile or siding capstock comprises, consists essentially of, or consists of the following components (the core-shell impact modifier, process aid(s), and calcium carbonate may optionally be included as an intimate blend that has been co-spray dried together):

| Components | phr | Range |
|---|---|---|
| PVC-5385, K65 (available from Axiall/Georgia Gulf) | 100.0 | |
| Thermolite® 179 for window profile (stabilizer, available from PMC); or Thermolite® 161 for siding capstock (stabilizer, available from PMC) | 1.0 | 0.7-1.5 |
| Calcium stearate | 1.2 | 0.9-1.5 |
| Rheolub® 165 (lubricant, available from Honeywell) | 1.0 | 0.5-1.5 |
| AC® 629A (lubricant, available from Honeywell) | 0.1 | 0.0-0.5 |
| Durastrength® 350 (acrylic core-shell impact modifier with 90 wt% rubber content, available from Arkema, Inc.) | 3.5 | 1.5-3.5 |
| Plastistrength® 530 (high molecular weight process aid, available from Arkema, Inc.) | 0.6 | 0.4-0.8 |
| P770 (low molecular weight process aid, available from Arkema, Inc.) | 0.4 | 0.0-0.6 |
| CaCO₃ (UFT, available from Omya) | 5.0 | 3-8 |
| TiO₂ (TiONA® RCL-4) | 10.0 | 9-12 |
| Total | 122.8 | |

References and an embodiment of a composition of the present invention that may be used in the manufacture of siding substrate comprises, consists essentially of, or consists of the following components (the core-shell impact modifier, process aid(s), and calcium carbonate may optionally be included as an intimate blend that has been co-spray dried together):

| Components | phr | Range |
|---|---|---|
| PVC-5385, K65 (available from Axiall/Georgia Gulf) | 100.0 | |
| Thermolite® 140 (stabilizer, available from PMC) | 1.0 | 0.7-1.5 |
| Calcium stearate | 1.2 | 0.9-1.5 |
| Rheolub® 165 (lubricant, available from Honeywell) | 1.0 | 0.5-1.5 |
| AC® 629A (lubricant, available from Honeywell) | 0.1 | 0.0-0.5 |
| Durastrength® 350 (acrylic core-shell impact modifier with 90 wt% rubber content, available from Arkema, Inc.) | 2.0 | 1.5-3.5 |
| Plastistrength® 576 (low Tg, high molecular weight process aid, available from Arkema, Inc.) | 0.2 | 0.0-3.0 |
| CaCO₃ (UFT, available from Omya) | 12.0 | 1-30 |
| TiO₂ (TiONA® RCL-4) | 0.5 | 0.1-5 |
| Total | 118.0 | |

Tables 1-3 below describe the colors and gloss of extruded sheets (Table 1), impact performance (Table 2), and processing times (Table 3) for PVC formulations that are identical except for the following impact modifiers, or combination of impact modifiers, as indicated in the tables:
D3000 = an intimate blend of core-shell impact modifier, process aid, and calcium carbonate co-spray dried together (available from Arkema, Inc.);
PD1133 = an intimate blend of core-shell impact modifier, process aid, and calcium carbonate co-spray dried together (available from Arkema, Inc.);
CPE = Chlorinated polyethylene;
P530 = Plastistrength® 530 high molecular weight process aid (Arkema, Inc.);
D350 = Durastrength® 350 (Arkema, Inc.) acrylic impact modifier with 90 wt% rubber content; and
P576 = Plastistrength® 576 low Tg, high molecular weight process aid (Arkema, Inc.).

In Table 1 below, the following abbreviations are used:
IM (Impact Modifier) Level = number of parts of Impact Modifier per 100 parts PVC resin;
PA (Process Aid) Level = number of parts of Process Aid per 100 parts PVC resin;
L = Hunter L;
A = Hunter A;
B = Hunter B;
Y1 = yellow index; and
20°, 60°, and 85° = gloss degree.

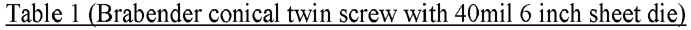

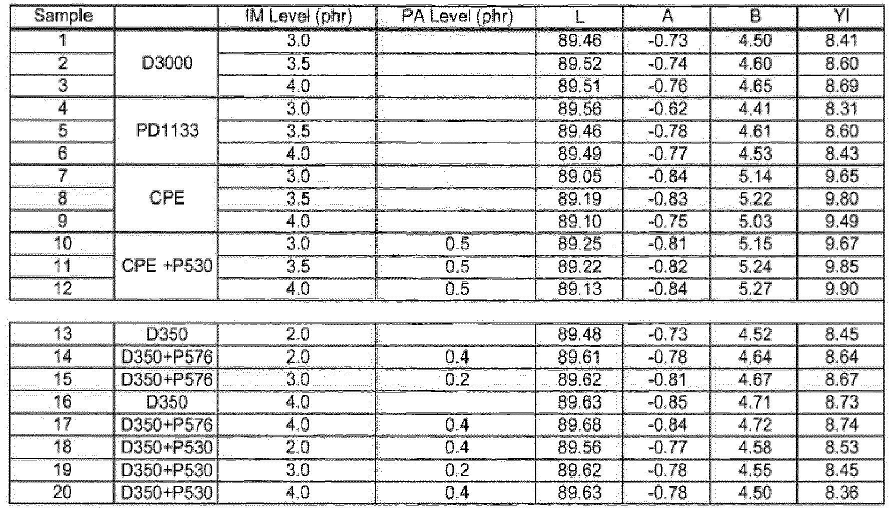

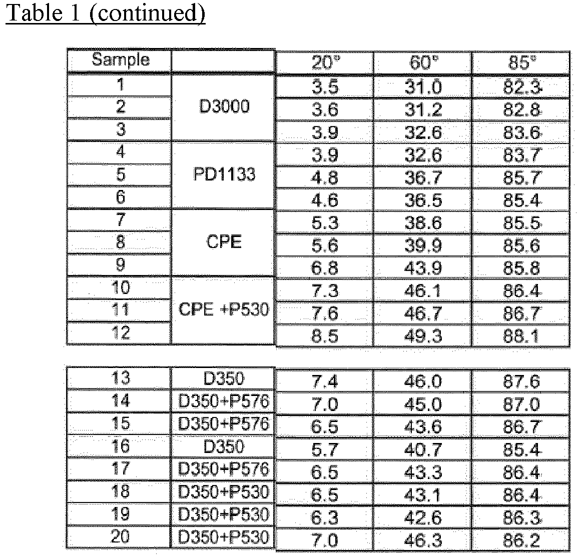

A dart drop impact test using ASTM D 4226, procedure A was performed to determine the normalized mean failure energy (normalized mean impact resistance) of each extruded composition shown below.

In Table 2 below, the following abbreviations are used:
IM (Impact Modifier) Level = number of parts of Impact Modifier per 100 parts PVC resin;
PA (Process Aid) Level = number of parts of Process Aid per 100 parts PVC resin;
MFE = Mean Failure Energy;
Thickness = thickness of the film (in mils);
MFE/mil = Mean Failure Energy per mil.

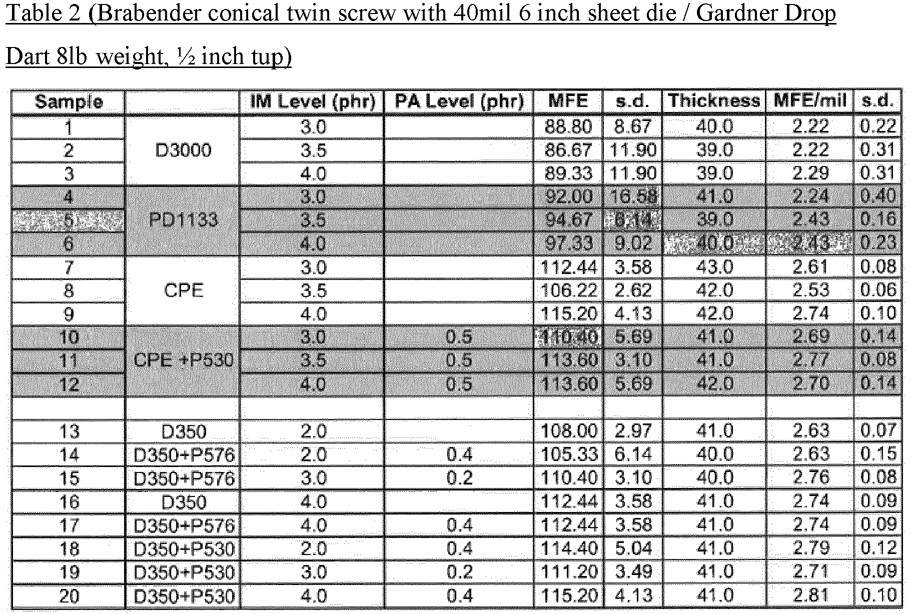

The data in Table 2 demonstrate that PVC formulations that contain less than 4 parts core-shell impact modifier per 100 parts PVC resin are capable of providing higher mean failure energy (MFE) values per mil compared to PVC formulations that contain 4.0 parts CPE per 100 parts PVC resin. For example, Sample 15 (3.0 parts core-shell impact modifier), Sample 18 (2.0 parts core-shell impact modifier), and Sample 19 (3.0 parts core-shell impact modifier) provided MFE/mil values of 2.76, 2.79 and 2.71, respectively, compared to Sample 12 (4.0 parts CPE), which provided an MFE/mil value of 2.70.

Table 3 below shows additive combinations at various loading levels run on a Brabender torque rheometer following ASTM D2538. In this analysis, Fusion Time was measured as the delta between the compaction peak and the fusion peak, Fusion Torque was measured as the height of the fusion peak, and Equilibrium Torque (EQ Torque) was measured as the torque after fusion when the slope of the torque/temperature graph is zero. Bulk Density was measured using ASTM D1895.

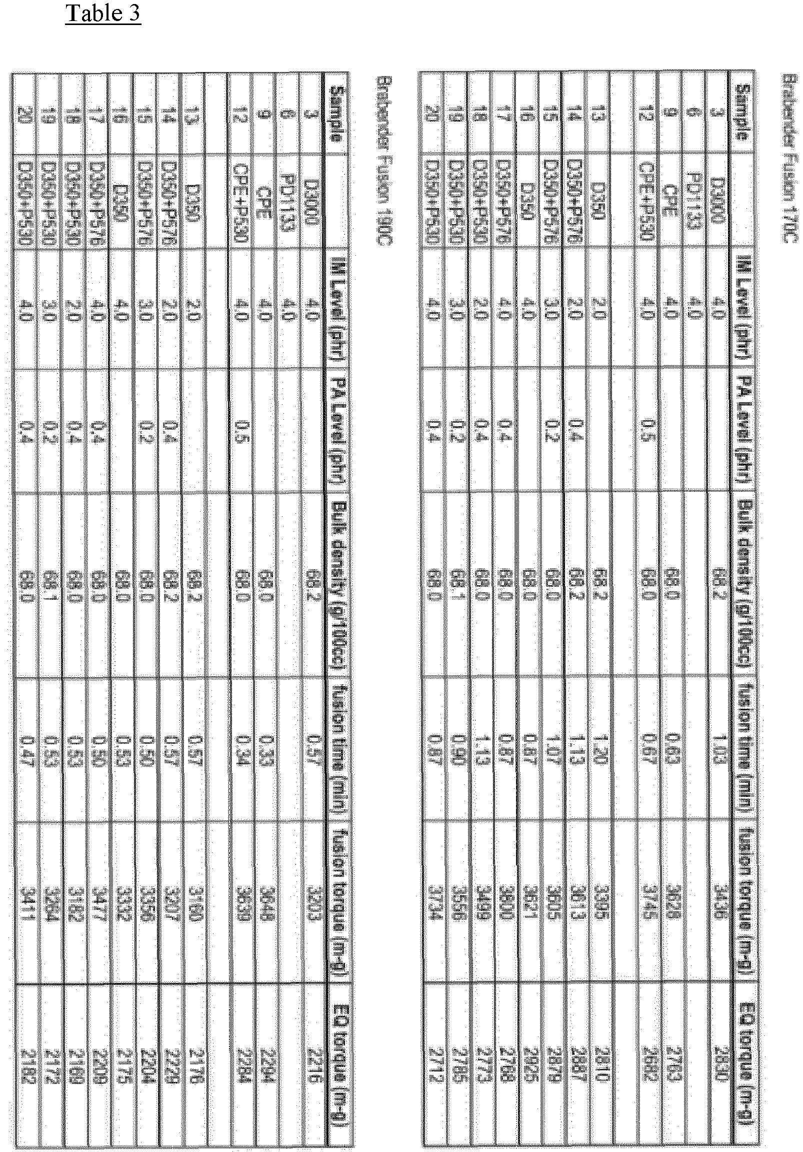

## Claims

1. A thermoplastic composition comprising:
a thermoplastic resin chosen from a PVC resin; and
between 1.5 parts and 2.5parts of a core-shell impact modifier per 100 parts by weight of the thermoplastic resin, wherein the core-shell impact modifier has a rubber content of at least 90 wt% and wherein the core-shell impact modifier is selected from the group consisting of methacrylate-butadiene-styrene copolymers (MBS), acrylonitrile-butadiene-styrene copolymers (ABS), acrylic core/shell polymers (AIM), and a combination thereof.

2. The thermoplastic composition of claim 1, wherein the core-shell impact modifier has a rubber content between 92 wt% and 95 wt% or between 93 wt% and 97 wt%.

3. The thermoplastic composition of claim 1, wherein a product formed from the composition has a normalized mean impact resistance that is equivalent to, or greater than, the normalized mean impact resistance of a product formed from a composition that is identical except that it includes at least 3.5 parts of chlorinated polyethylene per 100 parts of the thermoplastic resin instead of the core-shell impact modifier.

4. The thermoplastic composition of claim 1, further comprising at least one additional ingredient selected from the group consisting of (i) at least one stabilizer, (ii) at least one lubricant, (iii) at least one process aid, (iv) at least one mineral filler, and (v) a combination thereof.

5. An article comprising the thermoplastic composition of claim 1 in the form of a pipe, flooring, foam, siding, fencing, paneling, decking, capstock, a window frame, or a door frame.

6. A method for making the thermoplastic composition of any claims 1 to 4, comprising:
blending a thermoplastic resin chosen from a PVC resin , with between 1.5 parts and 2.5 parts of a core-shell impact modifier per 100 parts of the thermoplastic resin, wherein the core-shell impact modifier has a rubber content of at least 90 wt % and
wherein the core-shell impact modifier is selected from the group consisting of methacrylate-butadiene-styrene copolymers (MBS), acrylonitrile-butadiene-styrene copolymers (ABS), acrylic core/shell polymers (AIM), and a combination thereof.

7. The method of claim 6 further comprising blending at least one additional ingredient with the thermoplastic resin and the core-shell impact modifier, wherein the at least one ingredient is selected from the group consisting of (i) at least one stabilizer, (ii) at least one lubricant, (iii) at least one process aid, (iv) at least one mineral filler, and (v) a combination thereof.

8. The method of claim 6 further comprising extruding the thermoplastic composition to form an article.

9. An article manufactured according to the method of claim 8, wherein the article is in the form of a pipe, flooring, foam, siding, fencing, paneling, decking, capstock, a window frame, or a door frame.

10. The method of claim 6, wherein the core-shell impact modifier has a rubber content between 92 wt% and 95 wt%.

## Patentansprüche

1. Thermoplastische Zusammensetzung, umfassend:
ein aus einem PVC-Harz ausgewähltes thermoplastisches Harz; und
zwischen 1,5 Teile und 2,5 Teile eines Kern/Schale-Schlagzähigkeitsmodifikators je 100 Gewichtsteile des thermoplastischen Harzes, wobei der Kern/Schale-Schlagzähigkeitsmodifikator einen Kautschukgehalt von mindestens 90 Gew.-% aufweist und wobei der Kern/Schale-Schlagzähigkeitsmodifikator aus der Gruppe bestehend aus Methacrylat-Butadien-Styrol-Copolymeren (MBS), Acrylonitril-Butadien-Styrol-Copolymeren (ABS), Kern/Schale-Acrylpolymeren (AIM) und einer Kombination davon ausgewählt ist.

2. Thermoplastische Zusammensetzung nach Anspruch 1, wobei der Kern/Schale-Schlagzähigkeitsmodifikator einen Kautschukgehalt zwischen 92 Gew.-% und 95 Gew.-% oder zwischen 93 Gew.-% und 97 Gew.-% aufweist.

3. Thermoplastische Zusammensetzung nach Anspruch 1, wobei ein aus der Zusammensetzung gebildetes Produkt eine normalisierte mittlere Schlagzähigkeit aufweist, die gleich oder höher als die normalisierte mittlere Schlagzähigkeit eines Produkts ist, das aus einer Zusammensetzung gebildet wurde, die identisch ist, außer dass sie an Stelle des Kern/Schale-Schlagzähigkeitsmodifikators mindestens 3,5 Teile chloriertes Polyethylen je 100 Teile des thermoplastischen Harzes enthält.

4. Thermoplastische Zusammensetzung nach Anspruch 1, ferner umfassend mindestens einen zusätzlichen Bestandteil, der aus der Gruppe bestehend aus (i) mindestens einem Stabilisator, (ii) mindestens einem Schmiermittel, (iii) mindestens einem Verarbeitungshilfsmittel, (iv) mindestens einem mineralischen Füllstoff und (v) einer Kombination davon ausgewählt ist.

5. Gegenstand, umfassend die thermoplastische Zusammensetzung nach Anspruch 1, in Form eines Rohrs, eines Fußbodens, eines Schaums, einer Verkleidung, eines Zauns, einer Täfelung, eines Belags, einer Deckbeschichtung (Capstock), eines Fensterrahmens oder eines Türrahmens.

6. Verfahren zur Herstellung der thermoplastischen Zusammensetzung nach einem der Ansprüche 1 bis 4, umfassend
Vermischen eines aus einem PVC-Harz ausgewählten thermoplastischen Harzes mit 1,5 Teilen bis 2,5 Teilen eines Kern/Schale-Schlagzähigkeitsmodifikators je 100 Teile des thermoplastischen Harzes,
wobei der Kern/Schale-Schlagzähigkeitsmodifikator einen Kautschukgehalt von mindestens 90 Gew.-% aufweist und wobei der Kern/Schale-Schlagzähigkeitsmodifikator aus der Gruppe bestehend aus Methacrylat-Butadien-Styrol-Copolymeren (MBS), Acrylonitril-Butadien-Styrol-Copolymeren (ABS), Kern/Schale-Acrylpolymeren (AIM) und einer Kombination davon ausgewählt ist.

7. Verfahren nach Anspruch 6, ferner umfassend das Vermischen von mindestens einem zusätzlichen Bestandteil mit dem thermoplastischen Harz und dem Kern/Schale-Schlagzähigkeitsmodifikator, wobei der mindestens eine zusätzliche Bestandteil aus der Gruppe bestehend aus (i) mindestens einem Stabilisator, (ii) mindestens einem Schmiermittel, (iii) mindestens einem Verarbeitungshilfsmittel, (iv) mindestens einem mineralischen Füllstoff und (v) einer Kombination davon ausgewählt ist.

8. Verfahren nach Anspruch 6, ferner umfassend das Extrudieren der thermoplastischen Zusammensetzung zur Bildung eines Gegenstands.

9. Gegenstand, der gemäß dem Verfahren nach Anspruch 8 hergestellt ist, wobei der Gegenstand in Form eines Rohrs, eines Fußbodens, eines Schaums, einer Verkleidung, eines Zauns, einer Täfelung, eines Belags, einer Deckbeschichtung (Capstock), eines Fensterrahmens oder eines Türrahmens ist.

10. Verfahren nach Anspruch 6, wobei der Kern/Schale-Schlagzähigkeitsmodifikator einen Kautschukgehalt zwischen 92 Gew.-% und 95 Gew.-% aufweist.

## Revendications

1. Composition thermoplastique comprenant :
une résine thermoplastique choisie parmi une résine de PVC ; et
entre 1,5 parties et 2,5 parties d'un modificateur d'impact de type noyau-enveloppe par 100 parties en poids de la résine thermoplastique, le modificateur d'impact de type noyau-enveloppe possédant une teneur en caoutchouc d'au moins 90 % en poids et le modificateur d'impact de type noyau-enveloppe étant choisi dans le groupe constitué par des copolymères de méthacrylate-butadiène-styrène (MBS), des copolymères d'acrylonitrile-butadiène-styrène (ABS), des polymères de type noyau/enveloppe de type acrylique (AIM), et une combinaison correspondante.

2. Composition thermoplastique selon la revendication 1, le modificateur d'impact de type noyau-enveloppe possédant une teneur en caoutchouc comprise entre 92 % en poids et 95 % en poids ou entre 93 % en poids et 97 % en poids.

3. Composition thermoplastique selon la revendication 1, un produit formé à partir de la composition possédant une résistance à l'impact moyenne normalisée qui est équivalente à, ou supérieure à, la résistance à l'impact moyenne normalisée d'un produit formé à partir d'une composition qui est identique mise à part qu'elle comporte au moins 3,5 parties d'un polyéthylène chloré par 100 parties de la résine thermoplastique à la place du modificateur d'impact de type noyau-enveloppe.

4. Composition thermoplastique selon la revendication 1, comprenant en outre au moins un ingrédient supplémentaire choisi dans le groupe constitué par (i) au moins un stabilisant, (ii) au moins un lubrifiant, (iii) au moins un auxiliaire de traitement, (iv) au moins une charge minérale, et (v) une combinaison correspondante.

5. Article comprenant la composition thermoplastique selon la revendication 1 sous la forme d'un tuyau, d'un revêtement de sol, d'une mousse, d'un parement, d'une clôture, d'un panneau, d'un platelage, d'un revêtement de surface, d'un cadre de fenêtre, ou d'un cadre de porte.

6. Procédé pour la préparation de la composition thermoplastique selon l'une quelconque des revendications 1 à 4, comprenant
le mélange d'une résine thermoplastique choisie parmi une résine de PVC, avec entre 1,5 parties et 2,5 parties d'un modificateur d'impact de type noyau-enveloppe par 100 parties de la résine thermoplastique,
le modificateur d'impact de type noyau-enveloppe possédant une teneur en caoutchouc d'au moins 90 % en poids et
le modificateur d'impact de type noyau-enveloppe étant choisi dans le groupe constitué par des copolymères de méthacrylate-butadiène-styrène (MBS), des copolymères d'acrylonitrile-butadiène-styrène (ABS), des polymères de type noyau/enveloppe de type acrylique (AIM), et une combinaison correspondante.

7. Procédé selon la revendication 6 comprenant en outre le mélange d'au moins un ingrédient supplémentaire avec la résine thermoplastique et le modificateur d'impact de type noyau-enveloppe, l'au moins un ingrédient étant choisi dans le groupe constitué par (i) au moins un stabilisant, (ii) au moins un lubrifiant, (iii) au moins un auxiliaire de traitement, (iv) au moins une charge minérale, et (v) une combinaison correspondante.

8. Procédé selon la revendication 6 comprenant en outre l'extrusion de la composition thermoplastique pour former un article.

9. Article fabriqué selon le procédé selon la revendication 8, l'article étant sous la forme d'un tuyau, d'un revêtement de sol, d'une mousse, d'un parement, d'une clôture, d'un panneau, d'un platelage, d'un revêtement de surface, d'un cadre de fenêtre, ou d'un cadre de porte.

10. Procédé selon la revendication 6, le modificateur d'impact de type noyau-enveloppe possédant une teneur en caoutchouc comprise entre 92 % en poids et 95 % en poids.
